# EUROPEAN PATENT APPLICATION

(11) **EP 4 832 225 A1**
(43) Date of publication of application: **28.10.2026**
(21) Application number: 24928037.1
(22) Date of filing: 28.08.2024
(51) Int. Cl.: H01M 50/471, H01M 50/242

(54) **BATTERY, PRESSURE CONTROL UNIT, BATTERY PACK, ELECTRIC DEVICE, AND ENERGY STORAGE DEVICE**

(30) Priority: 06.03.2024 CN 202410254827
(71) Applicant: Contemporary Amperex Technology Co., Limited, Ningde, Fujian 352100 (CN)
(72) Inventor: HE, Runyong, Ningde, Fujian 352100 (CN); CHEN, Xingdi, Ningde, Fujian 352100 (CN); YAO, Pengcheng, Ningde, Fujian 352100 (CN)
(74) Representative: Straus, Alexander
(86) International application number: PCT/CN2024/115155
(87) International publication number: WO 2025/185106

(57) **Abstract**

A battery, a pressure control unit, a battery pack, an electric device, and an energy storage device. The battery comprises a housing assembly, at least one battery cell, and at least one pressure control unit. The battery cell is accommodated in the housing assembly, and the battery cell comprises an electrode assembly stacked in a first direction. The pressure control unit is accommodated in the housing assembly, and at least when the battery cell swells, the pressure control unit applies an action force to the battery cell to control the stress on the surface of the swollen battery cell. The pressure control unit is configured such that the size of the pressure control unit in the first direction can change as the battery cell swells.

## Description

### CROSS-REFERENCE TO RELATED APPLICATIONS

The present disclosure is based on and claims priority to the Chinese Patent Application No. 202410254827.9, filed on March 6, 2024 and entitled "BATTERY, PRESSURE CONTROL UNIT, BATTERY PACK, ELECTRIC DEVICE, AND ENERGY STORAGE DEVICE", which is incorporated into the present disclosure by reference in its entirety.

### TECHNICAL FIELD

The present disclosure relates to the field of battery technologies, and in particular, to a battery, a pressure control unit, a battery pack, an electric device, and an energy storage device.

### BACKGROUND

New energy batteries are increasingly widely used in daily life and industry. For example, new energy vehicles equipped with batteries have been widely used. In addition, batteries are increasingly applied in fields such as energy storage.

In a battery, battery cells may experience an increase in volume and swell during charge-discharge cycles. If excessive force occurs between battery cells due to swelling, undesirable situations such as excessive compression of the battery cells and stress concentration may occur, which negatively affect the cycle life and performance of the battery. Therefore, how to reduce risks caused by the swelling of battery cells has become one of the research topics in the industry.

### SUMMARY

To address the above technical issues, the present disclosure provides a battery, a pressure control unit, a battery pack, an electric device, and an energy storage device capable of controlling the stress on a surface of a swollen battery cell.

The present disclosure is implemented through the following technical solutions.

According to a first aspect of the present disclosure, a battery is provided. The battery includes a housing assembly; at least one battery cell accommodated in the housing assembly, the battery cell including electrode assemblies stacked along a first direction; and at least one pressure control unit accommodated in the housing assembly, the pressure control unit applying a force to the battery cell, at least when the battery cell swells, to control stress on a surface of the swollen battery cell; where the pressure control unit is configured such that a dimension of the pressure control unit along the first direction can change with the swelling of the battery cell.

Since the battery includes the pressure control unit, when the battery cell is swollen, the battery cell applies a force to the pressure control unit, and the pressure control unit applies a reaction force to the swollen battery cell, thereby reducing the swelling degree of the battery cell and mitigating the risks caused by swelling, which is beneficial for prolonging the cycle life of the battery.

In addition, since the dimension of the pressure control unit along the first direction can change with the swelling of the battery cell, it is possible to apply an appropriate swelling restraining force to the battery cell according to the swelling degree of the battery cell, providing an appropriate swelling space for the battery cell, so as to control stress on the surface of the swollen battery cell. In this way, the swelling force of the battery cell can be uniformly released, reducing the possibility of the battery cell undergoing free swelling, further making the force on the surface of the battery cell along the stacking direction of the electrode assemblies more uniform, and reducing the polarization accumulation of the battery cell, which is beneficial for improving the performance of the battery.

In some embodiments, the battery cell includes surfaces facing each other along the first direction, and at least when the battery cell swells, an average stress on the same surface of the same battery cell is within a range from 0.1 MPa to 2 MPa.

Accordingly, the pressure control unit may apply a swelling restraining force to the battery cell, so as to control the average stress on the surfaces of the battery cell facing each other along the first direction within an appropriate range, so that the average stress on the same surface can be maintained within an appropriate range, which is beneficial for prolonging the cycle life of the battery cell and thereby improving the performance of the battery.

In some embodiments, for the same surface of the same battery cell, a value of a minimum stress calculated per unit area divided by a maximum stress calculated per unit area at the same moment is greater than 50%.

Accordingly, the force on the surface of the battery cell can be made more uniform, and the possibility of stress concentration can be reduced, so that the battery cell has a favorable stress environment during the cycle process, thereby reducing the possibility of lithium precipitation in the battery cell, improving the performance of the battery, and extending the service life of the battery.

In some embodiments, a maximum pressure that the pressure control unit can apply is within a range from 200 N to 4000 N.

Accordingly, the pressure control unit can apply a relatively large swelling restraining force to the battery cell and controlling the swelling restraining force to be within an appropriate range, thereby effectively resisting the swelling force of the battery cell. Even when the swelling force of the battery cell is relatively large, the average stress on the surface (for example, a large surface) of the battery cell can still be maintained within an appropriate range. Moreover, since the maximum pressure that the pressure control unit can apply is relatively large, it is less likely that elastic failure occurs such that the pressure control unit cannot rebound and thus cannot continue to provide an appropriate swelling restraining force to the battery cell.

In some embodiments, each of the pressure control units includes at least one support member and at least one elastic member. A surface of the support member on one side along the first direction is in contact with one of the surfaces of the battery cell facing the first direction, and a surface of the support member on the other side along the first direction is in contact with the elastic member. The support member can apply a force to the battery cell under an action of the elastic force of the elastic member; where a contact area between the support member and the surface of the battery cell is greater than a contact area between the support member and the elastic member.

Accordingly, after the pressure control unit receives the swelling force released by the battery cell, the elastic member may be compressed and produce elastic deformation along the direction of the swelling force of the battery cell, and can rebound after the swelling force of the battery cell decreases. Correspondingly, a force is applied to the surface of the battery cell, thereby adapting to different swelling forms of the battery cell, so that the pressure control unit can maintain an appropriate force on the battery cell through the elastic member to control the swelling degree of the battery cell, providing an appropriate swelling space for the battery cell while reducing the swelling of the battery cell.

In addition, since the pressure control unit further includes a support member, and the contact area between the support member and the surface of the battery cell is greater than the contact area with the elastic member. Accordingly, the force applied by the elastic member to the battery cell can be dispersed, and the contact area between the pressure control unit and the surface of the battery cell can be increased, thereby making the stress on the surface of the battery cell more uniform and reducing the possibility of stress concentration.

In some embodiments, the support member is formed in a plate shape, and in each of the pressure control units, the number of the support members is at least two. The support members are disposed opposite each other along the first direction, and the elastic member is disposed between the two support members oppositely disposed along the first direction and connected to at least one of the two support members.

The plate-shaped support member can increase the contact area between the pressure control unit and the battery cell, thereby making the stress on the surface of the battery cell more uniform. Moreover, the plate-shaped support member is easy to process and simple to manufacture, and can effectively reduce production costs while dispersing stress on the surface of the battery cell.

In some embodiments, the support member is made of a rigid material.

Accordingly, the support member is not prone to deformation under the action of the elastic force of the elastic member, reducing the possibility of the support member undergoing large deformation during the transmission of the elastic force. As a result, the elastic force applied by the elastic member can be uniformly transmitted to the surface of the battery cell, making the force on the surface of the battery cell more uniform and providing a favorable stress distribution environment, which is beneficial for prolonging the cycle life of the battery cell and thereby improving the performance of the battery.

In some embodiments, the rigid material includes glass fiber or nylon plastic.

Materials such as glass fiber and nylon plastic have good mechanical properties, strong resistance to deformation under stress, and good dimensional stability and insulation properties, which can effectively reduce undesirable situations of local stress concentration on the surface of the battery cell.

In some embodiments, in each of the pressure control units, a plurality of elastic members are provided, and the plurality of elastic members are spaced apart from each other on the support member.

Accordingly, the plurality of elastic members can make the force applied to the surface of the battery cell more evenly distributed, thereby making the stress on the surface of the battery cell more uniform.

In some embodiments, the plurality of elastic members are disposed on the support member in an array arrangement; or the plurality of elastic members are disposed on the support member in a radial arrangement.

Accordingly, the arrangement of the elastic members may be set differently according to different swelling forms of the battery cell, thereby adaptively adjusting the force applied to the surface of the battery cell, providing an appropriate swelling space for the battery cell while playing a restraining and limiting role on the swelling of the battery cell, which helps maintain the structural stability of the battery.

In some embodiments, an equivalent outer diameter of each of the elastic members is less than or equal to 50 mm and greater than or equal to 1 mm.

Accordingly, the elastic force applied by a single elastic member is not excessively large, which helps provide an appropriate swelling restraining force for the battery cell and helps make the stress on the surface of the battery cell more uniform, reducing the possibility of stress concentration on the surface of the battery cell.

In some embodiments, a spacing distance between two adjacent elastic members is less than or equal to 4 times the equivalent outer diameter of the elastic members.

Accordingly, the plurality of elastic members may be arranged closely, and while an appropriate swelling restraining force is provided for the surface of the battery cell facing the first direction and an appropriate swelling space is provided for the surface of the battery cell facing the first direction, the pressure control unit provides a more uniform force to the surface of the battery cell, reducing the possibility of undesirable situations that an excessively large local stress occurs on the surface of the battery cell facing the first direction.

In some embodiments, in each of the pressure control units, the elastic members have the same or different stiffness.

Accordingly, the elastic members can be flexibly disposed according to different swelling forms of the battery cell, making the stress on the surface of the battery cell more uniform.

In some embodiments, the elastic member includes a compression spring.

Accordingly, the swelling degree of the battery cell can be controlled through a simple structure, so that while the swelling of the battery cell is reduced, an appropriate swelling space is also provided for the battery cell, thereby reducing the possibility of stress concentration in the battery cell.

In some embodiments, in each of the pressure control units, within the same projection plane perpendicular to the first direction, a projection area of the support member is greater than a projection area of the electrode assembly in the battery cell.

Accordingly, the pressure control unit can more effectively restrain the swelling of the battery cell, reducing the possibility of undesirable situations such as wrinkling of the electrode sheets in the electrode assembly due to free swelling of the battery cell, thereby maintaining the cycle life and the good performance of the battery.

In some embodiments, when viewed along the first direction, a portion of an outer contour of the elastic member disposed at one side edge of the support member protrudes beyond the side edge of the electrode assembly or overlaps with the side edge of the electrode assembly.

Accordingly, the side edge region of the electrode assembly can also be subjected to an elastic force, thereby helping to control the swelling degree of the entire surface of the battery cell facing the first direction.

In some embodiments, within the same projection plane perpendicular to the first direction, a projection area of the support member is less than or equal to a projection area of the electrode assembly in the battery cell, and when viewed along the first direction, the elastic member disposed at one side edge of the support member is recessed relative to the side edge of the electrode assembly or overlaps with the side edge of the electrode assembly.

Accordingly, the side edge region of the electrode assembly can also be subjected to an elastic force, thereby facilitating control of the swelling degree of the entire surface of the battery cell facing the first direction, while also helping to reduce the space occupied by the pressure control unit and helping to suppress the weight of the battery cell provided with the pressure control unit and even the battery pack.

In some embodiments, the support member includes a first surface and a second surface, the first surface being an opposite surface of the second surface along the first direction. The first surface and/or the second surface is provided with a buffer layer.

Accordingly, the stress on the surface of the battery cell can be further ensured to be uniform, reducing the problem of local stress concentration caused by excessive local surface deformation of the battery cell.

In some embodiments, the pressure control unit includes a fluid bladder. An accommodating cavity is formed inside the fluid bladder, the accommodating cavity contains a fluid medium, and the fluid bladder can contract or expand through flow of the fluid medium to apply a force to the battery cell through pressure generated by the fluid medium.

Accordingly, the fluid bladder can adjust the pressure generated by the fluid in the accommodating cavity on the bladder wall of the fluid bladder according to the swelling degree of the battery cell, applying an appropriate swelling restraining force to the battery cell, thereby controlling stress on the surface of the swollen battery cell. In this way, the swelling force of the battery cell can be uniformly released, providing an appropriate swelling space for the battery cell, reducing the possibility of the battery cell undergoing free swelling, further making the force on the surface of the battery cell along the stacking direction of the electrode assemblies more uniform, and reducing the polarization accumulation of the battery cell, which is beneficial for improving the performance of the battery.

In some embodiments, the fluid bladder includes an inlet and an outlet. The inlet and the outlet are respectively in communication with the accommodating cavity, the inlet is configured for the fluid medium to flow into the accommodating cavity from outside, and the outlet is configured for the fluid medium to flow out of the accommodating cavity. The fluid bladder can expand or contract through inflow or outflow of the fluid medium.

Since the fluid bladder includes the inlet and the outlet, and can respectively allow the fluid medium to flow into the accommodating cavity or make the fluid medium flow out of the accommodating cavity through the inlet and the outlet, an appropriate amount of fluid medium can flow into or out of the accommodating cavity according to the swelling degree of the battery cell. The force applied to the surface of the battery cell can be adjusted through different pressures generated by different amounts of fluid medium, so that while the swelling of the battery cell is limited, an appropriate swelling space can be provided for the battery cell, reducing the possibility of stress concentration and maintaining the structural stability of the battery.

In addition, circulation of the fluid medium inside the accommodating cavity can be achieved through the inlet and the outlet, thereby carrying away the heat of the battery cell to achieve heat exchange while reducing the swelling of the battery cell. In this way, pressure management and temperature management are integrated, without the need to provide an additional heat exchange structure, effectively saving space and reducing weight.

In some embodiments, the fluid bladder is made of an elastic material.

The elastic material has good elasticity, such that the fluid bladder can expand or contract effectively through the flow of the fluid medium. When subjected to the swelling force released by the battery cell, the fluid bladder can be compressed and produce elastic deformation along a direction of action of the swelling force of the battery cell, and can rebound after the swelling force of the battery cell decreases, thereby adapting to different swelling forms of the battery cell. This enables the fluid bladder to continuously apply an appropriate force to the surface of the battery cell along the first direction, providing an appropriate swelling space for the battery cell while reducing the swelling of the battery cell, so that the stress on the surface of the battery cell along the first direction becomes more uniform, reducing the possibility of stress concentration in the battery cell and effectively improving the performance of the battery.

In some embodiments, the elastic material includes elastic rubber.

Elastic rubber has good elasticity and is easy to mold, which can effectively reduce processing costs. In addition, elastic rubber has good wear resistance and anti-aging properties, which can improve the service performance of the fluid bladder.

In some embodiments, along the first direction, the pressure control unit is disposed adjacent to at least one of the surfaces of the battery cell facing the first direction.

Accordingly, the pressure control unit can apply a restraining force to the surface of the battery cell facing the first direction at least when the battery cell swells, thereby controlling the swelling degree of the battery cell.

In some embodiments, a plurality of the battery cells are provided, and the plurality of battery cells are arranged along the first direction. The pressure control unit is disposed between adjacent battery cells, and/or between the battery cell and an inner wall of the housing assembly adjacent to the battery cell.

Accordingly, one pressure control unit may simultaneously apply forces to adjacent battery cells, and may also apply an appropriate force to the surface of the battery cell adjacent to the housing assembly facing the first direction, thereby helping to provide an appropriate swelling restraining force for the battery cell, which is beneficial for improving the performance of the battery. Moreover, allowing adjacent battery cells to share one pressure control unit helps reduce the number of parts. Since the pressure control unit can be disposed between the inner wall of the housing assembly and the battery cell adjacent to the inner wall, a swelling restraining force can also be applied to the surface of the battery cell adjacent to the inner wall. Therefore, swelling restraint and pressure control can be applied to the large surfaces of each battery cell accommodated in the housing assembly.

In some embodiments, the pressure control unit is disposed between every two adjacent battery cells; and/or at least two battery cells form a battery cell group, and the pressure control unit is disposed between two battery cell groups; and/or the pressure control unit is disposed between the battery cell group and the battery cell adjacent to the battery cell group.

Accordingly, the pressure control unit can be arranged at different positions within the housing assembly according to different situations of the battery cells, so that forces can be simultaneously applied to a plurality of battery cells, thereby simultaneously controlling swelling of the plurality of battery cells.

In some embodiments, the battery cell includes a pouch battery cell or a prismatic battery cell.

Pouch battery cells are more prone to swelling during the charge-discharge process. Therefore, by providing the pressure control unit, the swelling of the pouch battery cell can be effectively reduced, thereby reducing the occurrence of undesirable phenomena such as lithium plating caused by excessive swelling of the pouch battery cell and improving the charge-discharge cycle life of the battery and the performance of the battery. Prismatic battery cells may also swell during the charge-discharge process, and the pressure control unit can similarly apply a force to the prismatic battery cell to control the swelling degree of the prismatic battery cell.

According to a second aspect of the present disclosure, a pressure control unit is provided for a battery. The battery includes at least one battery cell, and the battery cell includes electrode assemblies stacked along a first direction. The battery cell includes surfaces facing each other along the first direction. The pressure control unit applies a force to the battery cell, at least when the battery cell swells, to control stress on a surface of the swollen battery cell. The pressure control unit is configured such that a dimension of the pressure control unit along the first direction can change with the swelling of the battery cell.

When the battery cell swells, the pressure control unit can apply a force to the battery cell to control stress on the surface of the battery cell within an appropriate range, thereby reducing the swelling of the battery cell and providing an appropriate swelling space for the battery cell, so that the swelling force of the battery cell can be uniformly released, reducing the polarization accumulation of the battery cell, which is beneficial for improving the performance and charge-discharge cycle life of the battery.

In some embodiments, a maximum pressure that the pressure control unit can apply is within a range from 200 N to 4000 N.

Accordingly, the pressure control unit can apply a large swelling restraining force to the battery cell and can control the swelling restraining force within an appropriate range, thereby effectively resisting the swelling force of the battery cell. Even when the swelling force of the battery cell is relatively large, the average stress on the surface (for example, a large surface) of the battery cell can still be maintained within an appropriate range. Moreover, since the maximum pressure that the pressure control unit can apply is relatively large, it is less likely that elastic failure occurs such that the pressure control unit cannot rebound and thus cannot continue to provide an appropriate swelling restraining force to the battery cell.

In some embodiments, the pressure control unit includes at least one support member and at least one elastic member. A surface of the support member on one side along the first direction is in contact with one of the surfaces of the battery cell facing the first direction, and a surface of the support member on the other side along the first direction is in contact with the elastic member. The support member can apply a force to the battery cell under an action of the elastic force of the elastic member; where a contact area between the support member and the surface of the battery cell is greater than a contact area between the support member and the elastic member.

Accordingly, after the pressure control unit receives the swelling force released by the battery cell, the elastic member may be compressed and produce elastic deformation along the direction of the swelling force of the battery cell, and can rebound after the swelling force of the battery cell decreases. Correspondingly, a force is applied to the surface of the battery cell, thereby adapting to different swelling forms of the battery cell, so that the pressure control unit can maintain an appropriate force on the battery cell through an elastic action of the elastic member to control the swelling degree of the battery cell, providing an appropriate swelling space for the battery cell while reducing the swelling of the battery cell.

In addition, since the pressure control unit further includes the support member, and the contact area between the support member and the surface of the battery cell is greater than the contact surface with the elastic member, the force applied by the elastic member to the battery cell can be dispersed, thereby making the stress on the surface of the battery cell more uniform and reducing the possibility of stress concentration.

In some embodiments, the support member is configured as a plate shape, the number of the support members is at least two, and the support members are disposed opposite each other along the first direction. The elastic member is disposed between the two support members oppositely disposed along the first direction and connected to at least one of the two support members, and the elastic member includes a compression spring.

The plate-shaped support member can increase the contact area between the pressure control unit and the battery cell, thereby making the stress on the surface of the battery cell more uniform.

In addition, the swelling degree of the battery cell can be controlled through a simple structure such as the compression spring, so that while the swelling of the battery cell is reduced, an appropriate swelling space is also provided for the battery cell, thereby reducing the possibility of stress concentration in the battery cell.

According to a third aspect of the present disclosure, a battery pack is provided. The battery pack includes an enclosure and at least one battery according to the first aspect of the present disclosure, the battery being accommodated in the enclosure.

In the battery pack provided in the embodiments of the present disclosure, since the battery cells provided with pressure control units are adopted, an average stress on the large surfaces of the battery cells is maintained within an appropriate range and exhibits good uniformity, and the risk of stress concentration is reduced. Therefore, the risk of reduced battery pack charge-discharge cycle life due to swelling of the battery cells is reduced.

According to a fourth aspect of the present disclosure, an electric device is provided. The electric device including the battery according to the first aspect of the present disclosure for supplying electrical energy or the battery pack according to the third aspect of the present disclosure.

The electric device in the embodiments of the present disclosure adopts the battery pack with good performance as described above, thereby reducing the time spent on maintenance and reducing the risk that the electric device fails due to failure of the battery pack.

According to a fifth aspect of the present disclosure, an energy storage device is provided. The energy storage device includes the battery according to the first aspect of the present disclosure for storing electrical energy or supplying electrical energy or the battery pack according to the third aspect of the present disclosure.

The energy storage device in the embodiments of the present disclosure adopts the battery pack with good performance as described above, thereby reducing the time spent on maintenance and reducing the risk that the energy storage device fails due to failure of the battery pack.

### Beneficial effects of the invention

According to the present disclosure, by controlling stress on a surface of a swollen battery cell, an appropriate swelling space is provided for the battery cell while the swelling of the battery cell is reduced, so that the swelling force of the battery cell can be uniformly released, reducing the polarization accumulation of the battery cell, which is beneficial for improving the performance and charge-discharge cycle life of the battery.

### BRIEF DESCRIPTION OF DRAWINGS

Various other advantages and benefits will become apparent to those of ordinary skill in the art upon reading the following detailed descriptions of exemplary implementations. The accompanying drawings are merely intended to illustrate the purposes of the preferred embodiments, and should not be construed as a limitation on the present disclosure. Moreover, the same reference numerals are used to denote the same components throughout the accompanying drawings. In the drawings:
FIG. 1 is a schematic structural diagram of a vehicle according to some embodiments of the present disclosure;
FIG. 2 is a schematic exploded perspective view of a battery pack according to some embodiments of the present disclosure;
FIG. 3 is a schematic partial exploded perspective view of a battery according to some embodiments of the present disclosure;
FIG. 4 is a schematic partial exploded perspective view of another battery according to some embodiments of the present disclosure;
FIG. 5 is a planar schematic structural diagram of a support member and an elastic member of a pressure control unit according to some embodiments of the present disclosure;
FIG. 6 is a schematic partial exploded perspective view of yet another battery according to some embodiments of the present disclosure;
FIG. 7 is a schematic partial exploded perspective view of still another battery according to some embodiments of the present disclosure;
FIG. 8 is a perspective structural schematic diagram of a pressure control unit according to some embodiments of the present disclosure;
FIG. 9 is a schematic cross-sectional view of a pressure control unit according to some embodiments of the present disclosure; and
FIG. 10 is a perspective structural schematic diagram of a housing assembly and a top cover assembly of a battery according to some embodiments of the present disclosure.

### Description of reference numerals

1. fluid bladder; 11. accommodating cavity; 2. tab; 3. inlet; 4. outlet; 6. support member; 7. elastic member; 10. battery cell; 20. pressure control unit; 30. housing assembly; 40. top cover assembly; 100. battery; 200. controller; 300. motor; 400. battery pack; 401. enclosure; 401a. cover; 401b. bottom plate; 1000. vehicle; X. first direction; Y. second direction; and Z. third direction.

### DESCRIPTION OF EMBODIMENTS

The embodiments of the technical solutions of the present disclosure will be described in detail below with reference to the accompanying drawings. The following embodiments are only used to illustrate the technical solutions of the present disclosure more clearly, and thus are only used as examples and cannot be used to limit the protection scope of the present disclosure.

Unless otherwise defined, all technical and scientific terms used herein have the same meaning as commonly understood by those skilled in the technical field to which the present disclosure belongs; the terms used herein are only for the purpose of describing specific embodiments and are not intended to limit the present disclosure; and the terms "include" and "have" and any variations thereof in the present disclosure are intended to cover non-exclusive inclusions.

In the description of the embodiments of the present disclosure, the technical terms "first", "second", "third", "fourth", and the like are only used to distinguish different objects and should not be understood as indicating or implying relative importance or implicitly indicating the number, specific order, or primary-secondary relationship of the indicated technical features. In the description of the embodiments of the present disclosure, "a plurality of" means at least two unless otherwise specifically stated.

In this specification, reference to "embodiment" means that specific features, structures, or characteristics described with reference to the embodiment may be incorporated in at least one embodiment of the present disclosure. The word "embodiment" appearing in various positions in the specification does not necessarily refer to the same embodiment or an independent or alternative embodiment that is exclusive of other embodiments. Those skilled in the art should explicitly and implicitly understand that the embodiments described herein may be combined with other embodiments.

In the description of the embodiments of the present disclosure, the term "and/or" is only an associative relationship for describing associated objects, indicating that three relationships may be present. For example, A and/or B may indicate the following three cases: A exists alone, A and B exist simultaneously, and B exists alone. In addition, the character "/" herein generally indicates that the associated objects before and after are in an "or" relationship.

In the description of the embodiments of the present disclosure, the orientations or positional relationships indicated by the technical terms "length", "width", "thickness", "upper", "lower", "front", "rear", "left", "right", "vertical", "horizontal", "top", "bottom", "inside", "outside", and the like are based on the orientations or positional relationships shown in the accompanying drawings. These terms are merely for convenience and brevity of description of the embodiments of the present disclosure rather than indicating or implying that the means or components mentioned must have specific orientations or must be constructed, operated, or used according to specific orientations, and therefore shall not be construed as any limitations on embodiments of the present disclosure.

In the description of the embodiments of the present disclosure, unless otherwise clearly specified and limited, the technical terms such as "mounting", "interconnection", "connection", and "fixation" should be understood in a broad sense. For example, it may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in the embodiments of the present disclosure as appropriate to specific situations.

In the description of the embodiments of the present disclosure, unless otherwise clearly specified and defined, the technical term "contact" should be understood in a broad sense. It may be direct contact or contact through an intermediate medium layer, it may be contact between two entities with substantially no interaction force, or it may be contact between two entities with an interaction force.

Below, the present disclosure is described in detail.

At present, the application of new energy batteries in life and industry is becoming increasingly widespread. New energy batteries have been widely used in energy storage power supply systems such as hydroelectric power plants, thermal power plants, wind power plants, and solar power plants, as well as in many other fields including electric transportation tools such as electric bicycles, electric motorcycles, and electric vehicles, and aerospace. With the continuous expansion of the application fields of power batteries, their market demand is also continuously increasing.

During the charge-discharge cycle of battery cells in a battery, chemical reactions occur in internal components of the battery cell, such as the electrode assemblies and the electrolyte solution, which may lead to phenomena such as swelling of the negative electrode or gas generation, causing swelling of the battery cells.

Especially for lithium metal batteries using lithium metal as the negative electrode, volume expansion of the negative electrode occurs during cycling, which causes the thickness of the electrode to continuously increase, thereby resulting in battery bulging or even battery failure. Particularly for pouch batteries using flexible materials as battery housings, rigid structural members cannot be used to restrain swelling, and the consequences of such volume expansion are more pronounced in pouch cells.

Prismatic batteries may also experience outward bulging and swelling of battery cells.

In the related art, in order to avoid further adverse effects caused by structural interference between adjacent battery cells due to outward bulging and swelling, a certain gap is reserved between adjacent battery cells during battery assembly to provide swelling space for the battery cells. However, after such gaps are reserved between adjacent battery cells, the battery cells may undergo free swelling due to lack of external restraint, which may cause wrinkling of the electrode sheets in the electrode assembly and further lead to undesirable situations such as lithium plating, causing deterioration of the cycle performance of the battery and significantly shortening the service life of the battery.

In the related art, there is also such a solution: a buffer pad is sandwiched between adjacent battery cells. The buffer pad is made of foam or the like with a certain compressibility, and the buffer pad provides a certain swelling buffering effect for the battery cells. When the battery cell swells, it compresses the buffer pad to cause deformation thereof, and the buffer pad limits the swelling of the battery cell through a rebound force generated by its own elastic deformation. However, due to the limited deformation capability of the buffer pad, when the swelling force of the battery cell is excessively large, the buffer pad can hardly continue to deform, and repeated compression may cause permanent compressive deformation of the buffer pad, so that it can no longer provide a restraining effect on the swelling of the battery cell. That is, buffer pads such as foam of appropriate thickness cannot provide a sufficiently large restraining force relative to the swelling force of the battery cell, and thus effective pressure management cannot be performed for the battery cell.

Especially for batteries applied in fields such as aerospace, due to their unique application environments, requirements for battery performance that are adapted to the application scenarios are proposed. Taking an aircraft as an example, during takeoff or landing, the aircraft may draw a high discharge current from the battery, under which condition a large amount of heat may be released by the battery and the swelling degree of the battery may become more severe. In addition, when the aircraft flies at high altitude, reduction in air pressure and air density may further aggravate the swelling of the battery. Therefore, a larger swelling restraining force needs to be applied to the battery cells.

Therefore, it is desirable to apply an appropriate swelling restraining force to a swollen battery cell, so that the surface of the swollen battery cell has appropriate and relatively uniform stress while an appropriate swelling space is provided for the battery cells. That is, it is desirable to provide a battery capable of controlling stress on the surface of a swollen battery cell, a pressure control unit applied to such a battery, and an electric device and energy storage device including such a battery.

In view of the above problems existing in the related art, the present disclosure proposes a battery. The battery includes a housing assembly, at least one battery cell, and at least one pressure control unit. The battery cell is accommodated in the housing assembly, and the battery cell includes electrode assemblies stacked along a first direction. The pressure control unit is accommodated in the housing assembly, and the pressure control unit applies a force to the battery cell, at least when the battery cell swells, to control stress on a surface of the swollen battery cell. The pressure control unit is configured such that a dimension of the pressure control unit along the first direction can change with the swelling of the battery cell.

Since the battery includes the pressure control unit, when the battery cell swells, the battery cell applies a force to the pressure control unit, and the pressure control unit applies a reaction force to the battery cell, thereby reducing the swelling degree of the battery cell and reducing risks caused by swelling, which is beneficial for prolonging the cycle life of the battery.

In addition, since the dimension of the pressure control unit along the first direction can change with the swelling of the battery cell, it is possible to apply an appropriate swelling restraining force to the battery cell according to the swelling degree of the battery cell, providing an appropriate swelling space for the battery cell, so as to control stress on the surface of the swollen battery cell. In this way, the swelling force of the battery cell can be uniformly released, reducing the possibility of the battery cell undergoing free swelling, further making the force on the surface of the battery cell along the stacking direction of the electrode assemblies more uniform, and reducing the polarization accumulation of the battery cell, which is beneficial for improving the performance of the battery.

The battery provided in the embodiments of the present disclosure may be used in, but is not limited to, electric devices such as energy storage power systems, vehicles, ships, or aircraft, and energy storage devices such as energy storage containers and energy storage cabinets.

The battery provided in the embodiments of the present disclosure may also be grouped to be used as a battery pack. The battery pack may also be used in, but is not limited to, electric devices such as energy storage power systems, vehicles, ships, or aircraft, and energy storage devices such as energy storage containers and energy storage cabinets.

The embodiments of the present disclosure provide an electric device including the above battery or battery pack configured to supply electrical energy. The electric device includes, but is not limited to, a mobile phone, a tablet computer, a laptop computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

In the following embodiments, for the convenience of description, a vehicle 1000 is used as an example to illustrate an electric device according to an embodiment of the present disclosure. The following description is made with reference to the accompanying drawings.

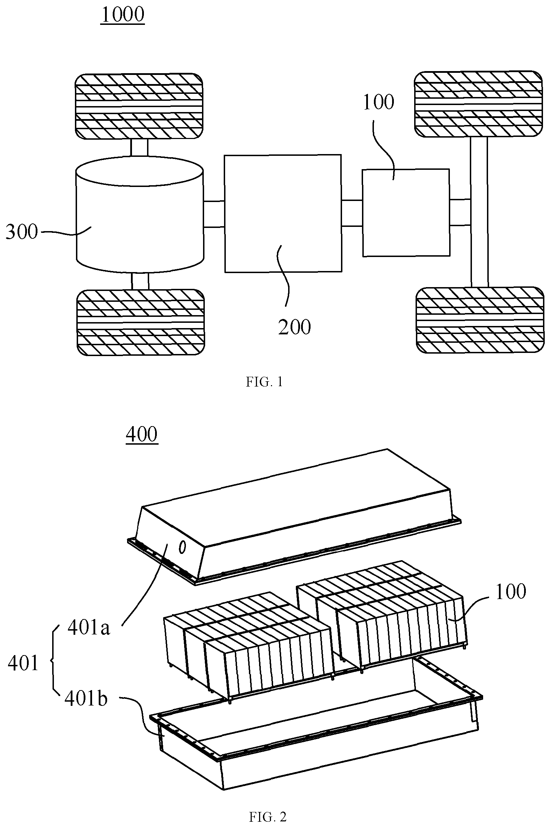

FIG. 1 is a schematic structural diagram of a vehicle 1000 according to some embodiments of the present disclosure. The vehicle 1000 may be a fuel vehicle, a gas vehicle, or a new energy vehicle, and the new energy vehicle can be a pure electric vehicle, a hybrid vehicle, an extended-range vehicle, or the like. As shown in FIG. 1, a battery 100 is provided inside the vehicle 1000, and the battery 100 may be disposed at the bottom, in the front, or at the rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of the present disclosure, the battery 100 can not only serve as an operating power source of the vehicle 1000, but also as a driving power source of the vehicle 1000, replacing or partially replacing fuel or natural gas to provide driving power for the vehicle 1000.

FIG. 2 is a schematic exploded perspective view of a battery pack 400 according to embodiments of the present disclosure. As shown in FIG. 2, the battery pack 400 includes an enclosure 401 and at least one battery 100. The enclosure 401 includes a cover 401a and a bottom plate 401b. The cover 401a is disposed over the bottom plate 401b, thereby forming an accommodation space for the battery 100 between the bottom plate 401b and the cover 401a.

In the battery pack 400, the battery 100 may be provided in plurality. The plurality of batteries 100 may be connected in series, parallel, or series-parallel, where being connected in series-parallel means a combination of series and parallel connections of the plurality of batteries 100. The plurality of batteries 100 may be directly connected in series, parallel, or series-parallel, and then an entirety formed by the plurality of batteries 100 is placed in the accommodation space formed by the bottom plate 401b and the cover 401a. Alternatively, the battery 100 may be formed by a plurality of battery cells 10 being connected in series, parallel, or series-parallel first to form a battery module, and then a plurality of battery modules are connected in series, parallel, or series-parallel to form an entirety and are accommodated in the accommodation space formed by the bottom plate 401b and the cover 401a. The battery pack 400 may also include other structures. For example, the battery pack 400 may also include a current collecting component configured to implement electrical connection between the plurality of batteries 100.

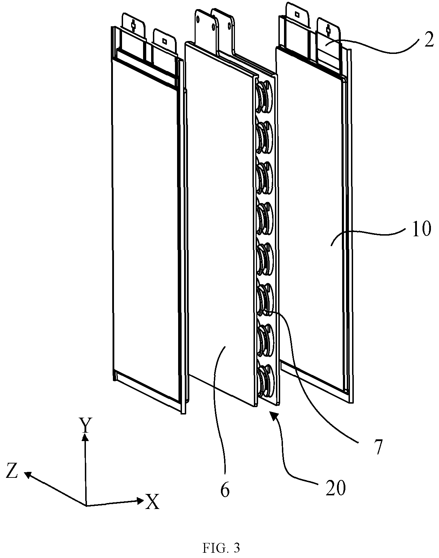

Below, some embodiments of the present disclosure are described in detail with reference to FIG. 3 to FIG. 10.

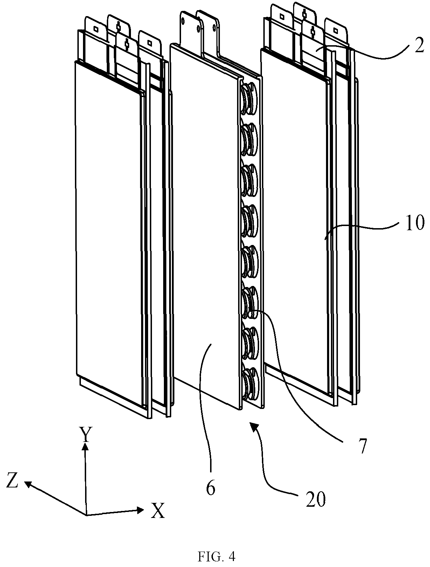

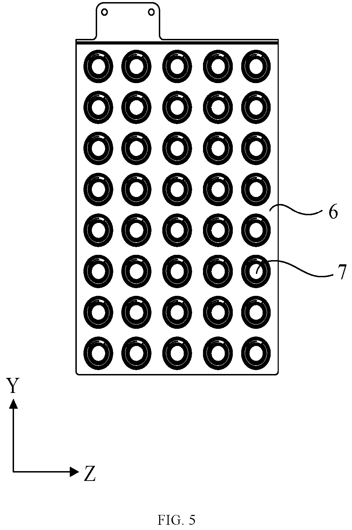

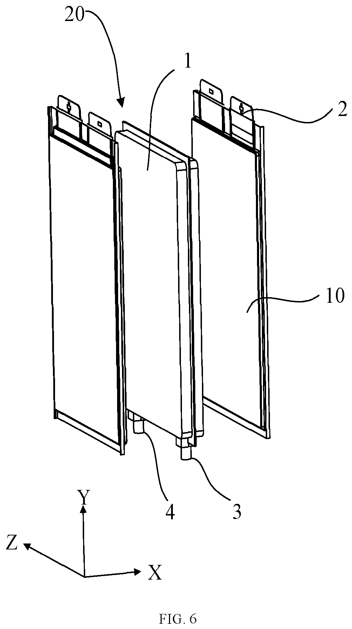

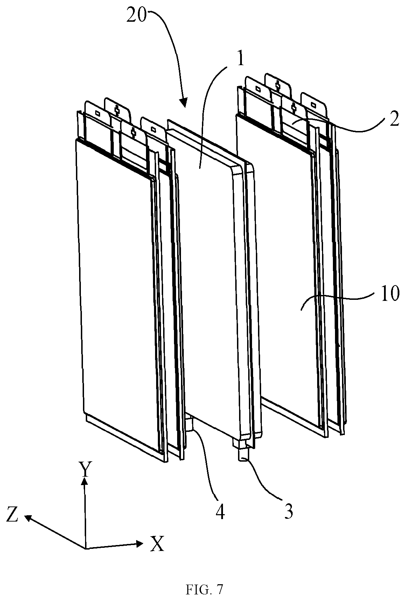

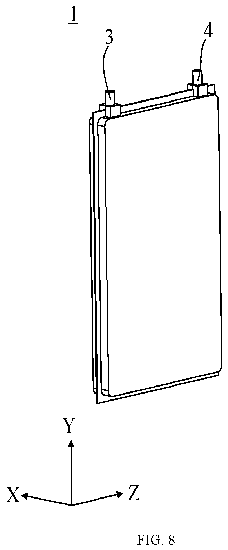

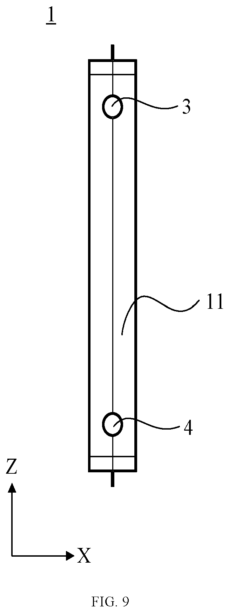

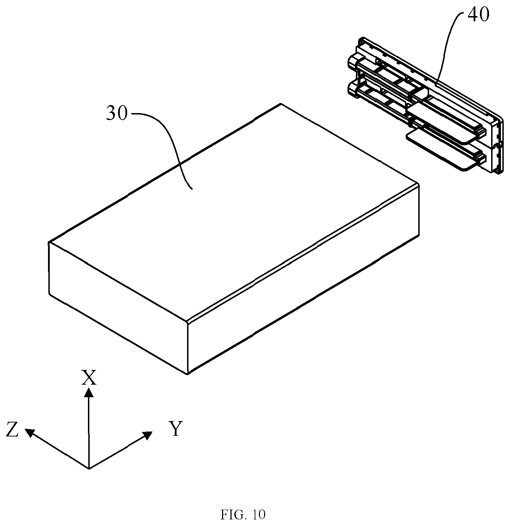

FIG. 3 is a schematic partial exploded perspective view of a battery according to some embodiments of the present disclosure. FIG. 4 is a schematic partial exploded perspective view of another battery according to some embodiments of the present disclosure. FIG. 5 is a planar structural schematic diagram of a support member and an elastic member of a pressure control unit according to some embodiments of the present disclosure. FIG. 6 is a schematic partial exploded perspective view of yet another battery according to some embodiments of the present disclosure. FIG. 7 is a schematic partial exploded perspective view of still another battery according to some embodiments of the present disclosure. FIG. 8 is a perspective structural schematic diagram of a pressure control unit according to some embodiments of the present disclosure. FIG. 9 is a schematic cross-sectional view of a pressure control unit according to some embodiments of the present disclosure. FIG. 10 is a perspective structural schematic diagram of a housing assembly and a top cover of a battery according to some embodiments of the present disclosure.

In some embodiments of the present disclosure, for convenience of description, a first direction, a second direction, and a third direction are defined. The first direction, the second direction, and the third direction are directions perpendicular to each other; however, those skilled in the art should understand that the embodiments of the present disclosure are not limited to the case in which the three directions are perpendicular to each other. For convenience of description, as indicated by the arrows in FIG. 3 to FIG. 10, the direction indicated by arrow X is defined as the first direction, the direction indicated by arrow Y is defined as the second direction, and the direction indicated by arrow Z is defined as the third direction.

As shown in FIG. 3, FIG. 4, FIG. 6, FIG. 7, and FIG. 10, according to a first aspect of the present disclosure, a battery 100 is provided. The battery 100 includes a housing assembly 30, at least one battery cell 10, and at least one pressure control unit 20. The battery cell 10 is accommodated in the housing assembly, and the battery cell 10 includes electrode assemblies stacked along a first direction. The pressure control unit 20 is accommodated in the housing assembly 30, and the pressure control unit 20 applies a force to the battery cell 10, at least when the battery cell 10 swells, to control stress on a surface of the swollen battery cell 10. The pressure control unit 20 is configured such that a dimension of the pressure control unit 20 along the first direction can change with the swelling of the battery cell 10.

The housing assembly 30 is an external protective housing of the battery 100.

By way of example, the housing assembly 30 may be formed by bending and welding metal plates, for example, thereby having good pressure-bearing capacity and better protecting the battery cells 10 accommodated therein.

In another example, the housing assembly 30 may be integrally formed by injection molding of plastic material. Under the condition of meeting basic strength requirements, the plastic material itself is lighter in weight and has good insulation performance, so that no additional insulating layer is required.

The battery 100 further includes a top cover assembly 40. The top cover assembly 40 is located on one side of the housing assembly 30 along the second direction and covers the housing assembly 30 to separate the internal environment of the battery 100 from the external environment, thereby further protecting the battery cells 10 accommodated in the housing assembly 30 and reducing the possibility of the battery cells 10 in the housing assembly 30 detaching from the housing assembly 30.

The battery cell 10 refers to a basic unit that can convert chemical energy and electrical energy into each other, and may be used to form a battery or a battery pack so as to supply power to an electric device.

The battery cell 10 may be a secondary battery cell. A secondary battery cell refers to a battery cell that can be recharged to activate active materials for continuous use after the battery cell 10 is discharged.

The battery cell 10 may be a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-hydrogen battery cell, a nickel-cadmium battery cell, a lead-acid battery cell, and the like. The embodiments of the present disclosure are not limited thereto.

Although not shown, the battery cell 10 includes electrode assemblies. The electrode assemblies are stacked along the first direction (also referred to as the thickness direction of the battery). The electrode assemblies are components in the battery cell 10 in which electrochemical reactions occur.

The electrode assembly include a positive electrode, a negative electrode, and a separator. During the charge-discharge process of the battery cell, active ions (such as lithium ions) are intercalated and deintercalated back and forth between the positive electrode and the negative electrode. The separator is sandwiched between the positive electrode and the negative electrode to prevent short circuit between the positive electrode and the negative electrode and allow active ions to pass through.

In some embodiments, the positive electrode may be a positive electrode sheet, and the positive electrode sheet may include a positive electrode current collector and a positive electrode active material disposed on at least one surface of the positive electrode current collector.

In an example, the positive electrode current collector has two opposite surfaces in its thickness direction, and the positive electrode active material is disposed on either or both of the two opposite surfaces of the positive electrode current collector.

In an example, the positive electrode current collector may be a metal foil current collector or a composite current collector. For example, aluminum or stainless steel with silver surface treatment, stainless steel, copper, aluminum, nickel, or titanium can be used as the metal foil. The composite current collector may include a polymer material base layer and a metal layer. The composite current collector may be formed by forming a metal material (aluminum, aluminum alloy, nickel, nickel alloy, titanium, titanium alloy, silver, and silver alloy, or the like) on a polymer material substrate (such as a substrate of polypropylene, polyethylene terephthalate, polybutylene terephthalate, polystyrene, or polyethylene).

In an example, the positive electrode active material may include at least one of the following materials: lithium-containing phosphate, lithium transition metal oxide, or respective modified compounds thereof. However, the present disclosure is not limited to these materials, and other conventional materials that can be used as battery positive electrode active materials may alternatively be used. These positive electrode active materials may be used alone or in combination of two or more. Examples of the lithium-containing phosphate may include, but are not limited to, at least one of lithium iron phosphate (for example, LiFePO4 (LFP for short)), composite materials of lithium iron phosphate and carbon, lithium manganese phosphate (for example, LiMnPO4), composite materials of lithium manganese phosphate and carbon, lithium manganese iron phosphate, or composite materials of lithium manganese iron phosphate and carbon.

In some embodiments, the positive electrode may use foam metal. The foam metal may be foam nickel, foam copper, foam aluminum, foam alloy, or the like. When foam metal is used as the positive electrode, the surface of the foam metal may be not provided with a positive electrode active material, or alternatively, a positive electrode active material may be provided. In an example, the metal foam may alternatively be filled with and/or have deposited therein a lithium source material, potassium metal, or sodium metal, where the lithium source material is a lithium metal and/or a lithium-rich material.

In some embodiments, the negative electrode may be a negative electrode sheet, and the negative electrode sheet may include a negative electrode current collector.

In an example, the negative electrode current collector may be a metal foil, foam metal, or composite current collector. For example, as the metal foil, the negative electrode current collector may use silver surface-treated aluminum or silver surface-treated stainless steel, stainless steel, copper, aluminum, nickel, or titanium. The composite current collector may include a polymer material base layer and a metal layer. The metal foam may be nickel foam, copper foam, aluminum foam, alloy foam, or the like. The composite current collector may be formed by forming a metal material (copper, copper alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, or polyethylene). In some embodiments, the positive electrode current collector may be made of aluminum, and the negative electrode current collector may be made of copper.

In some embodiments, the electrode assembly further includes a separator. The separator is disposed between the positive electrode and the negative electrode.

In some embodiments, the separator is a separator film. The separator film is not particularly limited in type in the present disclosure, and any well-known porous separator film with good chemical stability and mechanical stability may be selected.

In an example, the main material of the separator film may be selected from at least one of glass fiber, non-woven fabric, polyethylene, polypropylene, polyvinylidene fluoride, and ceramics.

In some embodiments, the separator is a solid electrolyte. The solid electrolyte is provided between the positive electrode and the negative electrode, and plays the role of transmitting ions and separating the positive electrode from the negative electrode.

In some embodiments, the electrode assembly is of a wound structure. The positive electrode sheet and the negative electrode sheet are wound into a wound structure.

In some embodiments, the electrode assembly is of a laminated structure.

In an example, a plurality of positive electrode sheets and a plurality of negative electrode sheets may be provided respectively, and the plurality of positive electrode sheets and the plurality of negative electrode sheets are alternately stacked.

In an example, a plurality of positive electrode sheets may be provided, and a negative electrode sheet is folded to form a plurality of stacked folding sections, with one positive electrode sheet sandwiched between adjacent folding sections.

In an example, both the positive electrode sheet and the negative electrode sheet are folded to form a plurality of stacked folding sections.

In an example, a plurality of separators may be provided and respectively disposed between any adjacent positive electrode sheets or negative electrode sheets.

In an example, the separator may be continuously provided and arranged between any adjacent positive electrode sheets or negative electrode sheets by folding or winding.

In some embodiments, the electrode assembly may have a cylindrical shape, a flat shape, a polygonal prism shape, or the like. In some embodiments, the battery cell 10 further includes an electrolyte, and the electrolyte plays the role of conducting ions between the positive electrode and the negative electrode. The present disclosure has no specific limitation on the type of electrolyte, and the electrolyte may be selected as required. The electrolyte may be in a liquid state, a gel state, or a solid state.

In some embodiments, the electrode assembly is provided with tabs 2, and the tabs 2 can conduct current from the electrode assembly. The tabs 2 include a positive tab and a negative tab.

In some embodiments, the battery cell 10 may include a casing. The casing is used for packaging components such as the electrode assembly and the electrolyte. The casing may be a steel casing, an aluminum casing, a plastic casing (such as polypropylene), a composite metal casing (such as copper-aluminum composite casing), an aluminum-plastic film, or the like.

In an example, the battery cell 10 may be a cylindrical battery cell, a prismatic battery cell, a pouch battery cell, or a battery cell of another shape. The prismatic battery cell includes a rectangular battery cell, a blade-type battery cell, and a multi-prismatic battery. The multi-prismatic battery is, for example, a hexagonal prismatic battery, which is not particularly limited in the present disclosure.

In the embodiments of the present disclosure, the battery 100 may alternatively be a single physical module including one or more battery cells 10 to provide a higher voltage and capacity. When a plurality of battery cells 10 are provided, the plurality of battery cells 10 may be connected in series, parallel, or series-parallel.

The battery 100 in the embodiments of the present disclosure further includes a pressure control unit 20. The pressure control unit 20 is disposed at least adjacent to one battery cell 10 and is configured to apply a force (swelling restraining force) to the battery cell 10 to control the swelling degree of the battery cell 10, thereby maintaining the stress on the surface of the battery cell 10 within an appropriate range while reducing the swelling of the battery cell 10. Since the battery cell 10 usually has the maximum degree of swelling along its thickness direction (first direction), the pressure control unit 20 is usually disposed adjacent to a surface of the battery cell 10 facing the first direction.

The stress on the surface of the battery cell refers to the ratio of a force applied to the surface of the battery cell to an area of the surface, and is typically expressed in Pascals (Pa). The magnitude of the stress depends on the magnitude of the force applied to the surface of the battery cell and the surface area of the battery cell.

Specifically, during assembly of the battery 100, the housing assembly 30 may contain only one battery cell 10 or may contain a plurality of battery cells 10. One pressure control unit 20 may have one or more battery cells 10 arranged on only one side thereof along the first direction, or may have one or more battery cells 10 arranged on both sides thereof. The pressure control unit 20 applies a force to the battery cell 10 at least when the battery cell 10 swells.

The pressure control unit 20 is generally in a rectangular flat shape. Through the rectangular and flat shape of the pressure control unit 20, surface contact between the pressure control unit 20 and the surface of the battery cell 10 facing the first direction can be achieved, so that the pressure control unit 20 can uniformly apply a force to the battery cell 10, reducing the possibility of stress concentration.

Since the battery 100 includes the pressure control unit 20, when the battery cell 10 swells, the battery cell 10 applies a force to the pressure control unit 20, and the pressure control unit 20 in turn applies a reaction force to the battery cell 10, thereby reducing the swelling degree of the battery cell 10 and mitigating the risks caused by swelling, which is beneficial for prolonging the cycle life of the battery.

By way of example, in an initial state, an outer side wall of the pressure control unit 20 may contact the surface of the battery cell 10 facing the first direction without applying a force to the surface. When the battery cell 10 swells, it applies a force to the pressure control unit 20, and the pressure control unit 20 undergoes elastic deformation after being compressed, thereby applying a reaction force to the battery cell 10 and reducing the swelling degree of the battery cell 10.

By way of another example, in the initial state, the outer side wall of the pressure control unit 20 may abut against the surface of the battery cell 10 facing the first direction and pre-apply a certain preload to the surface. When the battery cell 10 swells, it needs to overcome the preload applied by the pressure control unit 20 before swelling, thereby reducing the swelling degree of the battery cell 10.

In either case, the pressure control unit 20 can effectively reduce the free swelling of the battery cell 10, which is beneficial for prolonging the cycle life of the battery 100.

In addition, since the dimension of the pressure control unit 20 along the first direction can change with the swelling of the battery cell 10, it is possible to apply an appropriate swelling restraining force to the battery cell 10 according to the swelling degree of the battery cell 10, providing an appropriate swelling space for the battery cell 10, so as to control stress on the surface of the swollen battery cell 10. In this way, the swelling force of the battery cell 10 can be uniformly released, reducing the possibility of the battery cell 10 undergoing free swelling, further making the force on the surface of the battery cell 10 facing the stacking direction of the electrode assemblies more uniform, and reducing the polarization accumulation of the battery cell 10, which is beneficial for improving the performance of the battery 100.

In some embodiments, the battery cell includes surfaces facing each other along the first direction, and at least when the battery cell swells, an average stress on the same surface of the same battery cell is within a range from 0.1 MPa to 2 MPa.

Accordingly, the pressure control unit 20 may apply a force (swelling restraining force) to the battery cell 10, so as to control the average stress on the surfaces of the battery cell 10 facing each other along the first direction within an appropriate range, so that the average stress on the same surface can be maintained within an appropriate range, which is beneficial for prolonging the cycle life of the battery cell and thereby improving the performance of the battery.

Specifically, the average stress on the surface of the battery cell 10 facing the first direction is M, and the contact area between the pressure control unit 20 and the surface of the battery cell 10 along the first direction is S, then under an equilibrium state, the force F applied by the pressure control unit 20 to the surface of the battery cell 10 facing the first direction is F = S * M. Accordingly, the average stress M on the surface of the battery cell 10 facing the first direction can be maintained within an appropriate range between 0.1 MPa and 2 MPa through the calculated F.

By way of example, the average stress on the surface of the battery cell 10 facing the first direction may be 0.1 MPa, 0.2 MPa, 0.3 MPa, 0.4 MPa, 0.5 MPa, 0.6 MPa, 0.7 MPa, 0.8 MPa, 0.9 MPa, 1.0 MPa, 1.1 MPa, 1.2 MPa, 1.3 MPa, 1.4 MPa, 1.5 MPa, 1.6 MPa, 1.7 MPa, 1.8 MPa, 1.9 MPa, or 2 MPa.

The battery cell 10 may be tested using an in-situ swelling analyzer to find the most appropriate average stress on the surface of the battery cell 10 facing the first direction, and then the force applied by the pressure control unit 20 to the battery cell 10 is adjusted so that the average stress on the surface of the battery cell 10 facing the first direction is maintained within an optimal range, which is beneficial for prolonging the cycle life of the battery 100.

In some embodiments, for the same surface of the same battery cell, a value of a minimum stress calculated per unit area divided by a maximum stress calculated per unit area at the same moment is greater than 50%.

Accordingly, the force applies to the entire surface of the battery cell 10 facing the first direction can be made more uniform, and the possibility of stress concentration can be reduced, so that the battery cell 10 has a favorable stress environment during cycling, thereby reducing the possibility of lithium plating in the battery cell 10, improving the performance of the battery 100, and extending the service life of the battery 100.

In some embodiments, a maximum pressure that the pressure control unit can apply is within a range from 200 N to 4000 N.

Accordingly, the pressure control unit 20 can apply a relatively large swelling restraining force to the battery cell 10 and control the swelling restraining force to be within an appropriate range, thereby effectively resisting the swelling force of the battery cell 10. Even when the swelling force of the battery cell is relatively large, the average stress on the surface (for example, a large surface) of the battery cell can still be maintained within an appropriate range.

In addition, since the pressure control unit 20 can apply a relatively large maximum pressure, the pressure control unit 20 is less likely to experience undesirable situations, like a buffer pad, in which, due to elastic failure, it cannot rebound and thus cannot provide an appropriate swelling restraining force to the battery cell 10 again.

In some embodiments, as shown in FIG. 3 to FIG. 5, each pressure control unit 20 includes at least one support member 6 and at least one elastic member 7. A surface of the support member 6 on one side along the first direction is in contact with one of the surfaces of the battery cell 10 facing the first direction, and a surface of the support member 6 on the other side along the first direction is in contact with the elastic member 7. The support member 6 can apply a force to the battery cell 10 under an action of the elastic force of the elastic member 7, where a contact area between the support member 6 and the surface of the battery cell 10 is greater than a contact area between the support member 6 and the elastic member 7.

Accordingly, after the pressure control unit 20 receives the swelling force released by the battery cell 10, the elastic member 7 may be compressed and produce elastic deformation in the direction of the swelling force of the battery cell, and can rebound after the swelling force of the battery cell 10 decreases. Correspondingly, a force is applied to the surface of the battery cell 10, thereby adapting to different swelling forms of the battery cell 10, so that the pressure control unit 20 can maintain an appropriate force on the battery cell 10 through the elastic member 7 to control the swelling degree of the battery cell 10, providing an appropriate swelling space for the battery cell 10 while reducing the swelling of the battery cell 10.

Specifically, pressure control units 20 with elastic members 7 of different stiffness may be selected according to the swelling degree of different battery cells 10, thereby providing different pressure environments for different battery cells 10, better reducing the swelling of the battery cell 10, and prolonging the cycle life of the battery cell 10. For example, when the swelling degree of the battery cell 10 is large, an elastic member 7 with higher stiffness should be selected to better reduce the swelling of the battery cell 10. When the swelling degree of the battery cell 10 is small, an elastic member 7 with lower stiffness may be selected to avoid stress concentration.

In the embodiments of the present disclosure, no specific limitation is imposed on the stiffness of the elastic member 7 of the pressure control unit 20, as long as the average stress on the surface of the battery cell 10 can be ensured to be within an appropriate range.

In addition, the pressure control unit 20 further includes a support member 6, and the contact area between the support member 6 and the surface of the battery cell 10 is greater than the contact surface with the elastic member 7. Accordingly, the force applied by the elastic member 7 to the battery cell 10 can be dispersed, and the contact area between the pressure control unit 20 and the surface of the battery cell can be increased, thereby making the stress on the surface of the battery cell more uniform and reducing the possibility of stress concentration.

When a plurality of elastic members 7 are provided, a plurality of support members 6 may also be provided, and the surfaces of the support member 6 on one side along the first direction are respectively in contact connection with the elastic member 7. However, when a plurality of elastic members 7 are provided, the number of support members 6 may alternatively be only one, and the surface of a single support member 6 on one side in the first direction is in contact with a plurality of elastic members 7.

By way of example, both end faces of the elastic member 7 on opposite sides facing the first direction may be connected to support members 6.

By way of another example, only one of the end faces of the elastic member 7 on opposite sides facing the first direction may be connected to a support member 6.

By way of another example, the pressure control unit 20 may also include only elastic member 7, that is, neither end face of the elastic member 7 on opposite sides facing the first direction is connected to a support member 6.

In the embodiments of the present disclosure, no specific limitation is imposed on the shape of the support member 6, as long as it can increase the contact area with the surface of the battery cell 10 and disperse the force provided by the elastic member 7.

In some embodiments, as shown in FIG. 3 to FIG. 5, the support member 6 is formed in a plate shape, and in each pressure control unit 20, the number of the support members 6 is at least two. The support members 6 are disposed opposite each other along the first direction, and the elastic member 7 is disposed between the two support members 6 oppositely disposed along the first direction and connected to at least one of the two support members 6.

The plate-shaped support member 6 can increase the contact area between the pressure control unit 20 and the battery cell 10, thereby making the stress on the surface of the battery cell 10 more uniform.

Moreover, the plate-shaped support member 6 is easy to process and simple to manufacture, and can effectively reduce production costs while dispersing stress on the surface of the battery cell 10.

In the embodiments of the present disclosure, the number of plate-shaped support members 6 is two, with the elastic member 7 disposed between the two support members 6, thereby providing good and uniform swelling restraining force for the battery cells 10 on both sides of the pressure control unit 20 facing the first direction.

In some other embodiments, the number of support members 6 may alternatively be more (more than two). For example, taking the pressure control unit 20 including three plate-shaped support members 6 as an example, the three support members 6 are opposite each other along the first direction, with an elastic member 7 disposed between adjacent support members 6. In this way, when the stiffness of the elastic members 7 is insufficient to provide an appropriate swelling restraining force for the surface of the battery cell 10, the number of elastic members 7 can be increased through this arrangement, so that the pressure control unit 20 can provide a larger force for the surface of the battery cell 10.

In the embodiments of the present disclosure, no specific limitation is imposed on the number of plate-shaped support members 6, which can be set according to actual conditions.

In some embodiments, the support member 6 is made of a rigid material.

Accordingly, the support member 6 is not prone to deformation under the action of the elastic force of the elastic member 7, reducing the possibility of the support member 6 undergoing large deformation during the transmission of the elastic force. As a result, the elastic force applied by the elastic member 7 can be uniformly transmitted to the surface of the battery cell 10, making the force on the surface of the battery cell 10 more uniform and providing a favorable stress distribution environment, which is beneficial for prolonging the cycle life of the battery cell 10 and thereby improving the performance of the battery 100.

In some embodiments, the rigid material includes glass fiber or nylon plastic.

Materials such as glass fiber and nylon plastic have good mechanical properties, strong resistance to deformation under stress, and good dimensional stability and insulation properties, so they can effectively reduce undesirable situations of local stress concentration on the surface of the battery cell 10.

However, those skilled in the art should understand that in some other embodiments, the support member 6 may alternatively be made of other suitable rigid materials.

In some embodiments, in each pressure control unit 20, a plurality of elastic members 7 are provided, and the plurality of elastic members 7 are spaced apart from each other on the support member 6.

Accordingly, the plurality of elastic members 7 can transmit the elastic force relatively uniformly to the surface of the battery cell 10, making the force applied to the surface of the battery cell 10 more evenly distributed, thereby making the stress on the surface of the battery cell 10 more uniform.

In some embodiments, the plurality of elastic members 7 are disposed on the support member 6 in an array arrangement, or the plurality of elastic members 7 are disposed on the support member 6 in a radial arrangement.

Accordingly, the arrangement of the elastic members 7 may be set differently according to different swelling forms of the battery cell 10, thereby adaptively adjusting the force applied to the surface of the battery cell 10, providing an appropriate swelling space for the battery cell 10 while playing a restraining and limiting role on the swelling of the battery cell 10, which helps maintain the structural stability of the battery 100.

By way of example, the pressure control unit 20 may adjust the arrangement of the elastic members 7 according to different swelling forms of the battery cell 10. For example, the elastic members 7 are arranged more densely at portions with a relatively large degree of swelling, so as to provide a larger elastic force and better suppress swelling of the battery cell 10, and at portions with a relatively small degree of swelling, the elastic members 7 are arranged relatively sparsely to reduce the possibility of stress concentration on the surface of the battery cell 10.

By way of another example, as shown in FIG. 5, spacing distances between elastic members 7 along the second direction and along the third direction are the same, so that a plurality of elastic members 7 can transmit the elastic force relatively uniformly to the surface of the battery cell 10, making the stress on the surface of the battery cell 10 more uniform.

In some embodiments, an equivalent outer diameter of each elastic member 7 is less than or equal to 50 mm and greater than or equal to 1 mm.

The equivalent outer diameter refers to the outer diameter of a circular cross-section having the same area as the cross-section of the elastic member.

By way of example, the equivalent outer diameter of each elastic member 7 may be 5 mm, 10 mm, 15 mm, 20 mm, 25 mm, 30 mm, 35 mm, 40 mm, 45 mm, or the like.

Accordingly, the elastic force applied by a single elastic member 7 is not excessively large, which helps provide an appropriate swelling restraining force for the battery cell 10 and helps make the stress on the surface of the battery cell 10 more uniform, reducing the possibility of stress concentration on the surface of the battery cell 10.

In some embodiments, a spacing distance between two adjacent elastic members is less than or equal to 4 times the equivalent outer diameter of the elastic members.

Optionally, the spacing distance between two adjacent elastic members 7 is less than or equal to 2 times the equivalent outer diameter of the elastic members 7.

Accordingly, the plurality of elastic members 7 may be arranged closely, and while an appropriate swelling restraining force is provided for the surface of the battery cell 10 facing the first direction and an appropriate swelling space is provided for the surface of the battery cell 10 facing the first direction, the pressure control unit 20 provides a more uniform force to the surface of the battery cell 10, reducing the possibility of undesirable situations that an excessively large local stress occurs on the surface of the battery cell 10 facing the first direction.

In some embodiments, in each pressure control unit 20, the elastic members 7 have the same or different stiffness.

Accordingly, the elastic members 7 can be flexibly disposed according to different swelling forms of the battery cell 10, making the stress on the surface of the battery cell 10 more uniform.

By way of example, the central region of the battery cell 10 usually has a large degree of swelling deformation, so the stiffness of the elastic members 7 in the central region of the pressure control unit 20 may be greater than that of the elastic members 7 in other regions. In this way, a larger swelling restraining force can be provided for the central region of the battery cell 10, thereby better reducing the swelling of the battery cell 10.

In some embodiments, the elastic member 7 includes a compression spring.

Accordingly, the swelling degree of the battery cell 10 can be controlled through a simple structure, so that while the swelling of the battery cell 10 is reduced, an appropriate swelling space is also provided for the battery cell 10, thereby reducing the possibility of stress concentration in the battery cell 10.

However, those skilled in the art should understand that in some other embodiments, the elastic member 7 may alternatively include any other suitable mechanism such as a leaf spring.

In some embodiments, in each pressure control unit 20, within the same projection plane perpendicular to the first direction, a projection area of the support member 6 is greater than a projection area of the electrode assembly in the battery cell 10.

Accordingly, the pressure control unit 20 can more effectively restrain the swelling of the battery cell 10, reducing the possibility of undesirable situations such as wrinkling of the electrode sheets in the electrode assembly due to free swelling of the battery cell 10, thereby maintaining the cycle life and good performance of the battery 100.

By way of example, within the same projection plane perpendicular to the first direction, the projection area of the support member 6 is at least greater than 50% of the projection area of the electrode assembly in the battery cell 10, preferably the same as or greater than the projection area of the electrode assembly in the battery cell 10. In this way, the swelling degree of the battery cell 10 can be fully and better controlled.

In some embodiments, when viewed along the first direction, a portion of an outer contour of the elastic member 7 disposed at one side edge of the support member 6 protrudes beyond the side edge of the electrode assembly or overlaps with the side edge of the electrode assembly.

Accordingly, the side edge region of the electrode assembly can also be subjected to an elastic force, thereby further helping to control the swelling degree of the entire surface of the battery cell 10 facing the first direction.

By way of example, when viewed along the first direction, the dimension by which a portion of the outer contour of the elastic member 7 disposed at one side edge of the support member 6 protrudes beyond the side edge of the electrode assembly is less than 3 times the equivalent outer diameter of the elastic members, optionally less than 1 time the equivalent outer diameter of the elastic members.

In some embodiments, within the same projection plane perpendicular to the first direction, a projection area of the support member 6 is less than or equal to a projection area of the electrode assembly in the battery cell 10, and when viewed along the first direction, the elastic member 7 disposed at one side edge of the support member 6 is recessed relative to the side edge of the electrode assembly or overlaps with the side edge of the electrode assembly.

Accordingly, the side edge region of the electrode assembly can also be subjected to an elastic force, thereby facilitating control of the swelling degree of the entire surface of the battery cell 10 facing the first direction, while also helping to reduce the space occupied by the pressure control unit 20 and helping to reduce the weight of the battery cell 10 provided with the pressure control unit 20 and even the battery pack 400.

By way of example, when viewed along the first direction, the dimension by which a portion of the outer contour of the elastic member 7 disposed at one side edge of the support member 6 is recessed relative to the side edge of the electrode assembly is less than 3 times the equivalent outer diameter of the elastic members, optionally less than 1 time the equivalent outer diameter of the elastic members.

In some embodiments, the support member 6 includes a first surface and a second surface, the first surface being an opposite surface of the second surface along the first direction. The first surface and/or the second surface is provided with a buffer layer.

Accordingly, the stress on the surface of the battery cell 10 can be further ensured to be uniform, reducing the problem of local stress concentration caused by excessive local surface deformation of the battery cell 10.

In some embodiments, as shown in FIG. 6 to FIG. 9, the pressure control unit 20 includes a fluid bladder 1. An accommodating cavity 11 is formed inside the fluid bladder 1, the accommodating cavity 11 contains a fluid medium, and the fluid bladder 1 can contract or expand through flow of the fluid medium to apply a force to the battery cell 10 through fluid pressure generated by the fluid medium.

The fluid bladder 1 is an elastic bladder with an accommodating cavity 11 inside. The accommodating cavity 11 contains fluid medium such as gas or liquid, and achieves elastic action by taking advantage of the compressibility of gas or the fluidity of liquid. That is, the fluid bladder 1 can change the amount of fluid medium flowing into the accommodating cavity 11 by controlling the flow of the fluid medium to control the contraction or expansion of the fluid bladder 1, thereby applying different forces to the battery cell 10 through different fluid pressures.

In addition, the fluid bladder 1 can also adjust the degree of contraction or expansion according to the swelling degree of the battery cell 10, providing an appropriate swelling space for the battery cell 10. In this way, the swelling force of the battery cell 10 can be uniformly released, reducing the possibility of the battery cell 10 undergoing free swelling, thereby making the force on the surface of the battery cell 10 facing the stacking direction of the electrode assemblies more uniform, and reducing the polarization accumulation of the battery cell 10, which is beneficial for improving the performance of the battery 100.

Moreover, since the fluid bladder 1 expands or contracts through the flow of the fluid medium, the pressure on the bladder wall of the fluid bladder 1 can be changed through transformation of fluid pressure, thereby applying a swelling restraining force to the battery cell 10. Therefore, the degree of expansion of the fluid bladder 1 can be changed by changing the inflow amount of the fluid medium. Even with repeated expansion or contraction, the deformation capacity of the fluid bladder 1 is not prone to change, thereby providing a reliable and stable force for the battery cell 10.

By way of example, the fluid medium may be gas, for example, and the gas includes, but is not limited to, inert gas.

By way of another example, the fluid medium may be liquid, and the liquid includes, but is not limited to water and silicone oil.

When the fluid medium is liquid, the fluid bladder 1 can not only reduce the swelling of the battery cell 10, but also provide a certain cooling effect for the battery cell 10, thereby accelerating the heat dissipation rate of the battery 100.

By way of example, the casing of the fluid bladder 1 may be provided with a weak portion, for example, and the weak portion will rupture when a preset temperature is reached. In this way, in the case of thermal runaway of the battery cell 10, the weak portion of the fluid bladder 1 may melt or rupture at high temperature, so that the fluid medium in the fluid bladder 1 flows out and rapidly cools the battery cell 10, reducing the further aggravation of thermal runaway.

In some embodiments, as shown in FIG. 8, the fluid bladder 1 includes an inlet 3 and an outlet 4. The inlet 3 and the outlet 4 are respectively in communication with the accommodating cavity, the inlet 3 is configured for the fluid medium to flow into the accommodating cavity 11 from outside, and the outlet 4 is configured for the fluid medium to flow out of the accommodating cavity 11. The fluid bladder 1 can expand or contract through inflow or outflow of the fluid medium.

The inlet 3 and the outlet 4 are connected to an external fluid medium supply apparatus (not shown in the figures). The fluid medium in the fluid medium supply unit can be injected into the accommodating cavity 11 through the inlet 3, thereby expanding the fluid bladder 1, and the fluid medium in the accommodating cavity 11 can also flow out of the accommodating cavity 11 through the outlet 4, thereby contracting the fluid bladder 1. Accordingly, the fluid bladder 1 can adjust the force applied by the fluid bladder 1 to the battery cell 10 by changing the pressure according to the swelling degree of the battery cell 10, to alleviate the change in internal stress after the swelling of the battery cell 10. Thus, while the swelling of the battery cell 10 is limited, an appropriate swelling space can be provided for the battery cell 10, reducing the possibility of stress concentration and maintaining the structural stability of the battery 100.

By way of example, valves may be provided at the inlet 3 and the outlet 4 to control the opening or closing of the inlet 3 and the outlet 4.

By way of another example, flow meters may also be provided at the inlet 3 and the outlet 4, so that the fluid pressure can be calculated according to the amount of fluid medium flowing into the accommodating cavity 11, and thus the magnitude of the force applied by the fluid bladder 1 to the surface of the battery cell 10 facing the first direction can be obtained.

In addition, circulation of the fluid medium inside the accommodating cavity 11 can also be achieved through the inlet 3 and the outlet 4, thereby carrying away the heat of the battery cell 10 to achieve heat exchange while reducing the swelling of the battery cell 10. In this way, pressure management and temperature management are integrated, without the need to provide an additional heat exchange structure, effectively saving space and reducing weight.

In some embodiments, the fluid bladder 1 is made of an elastic material.

The elastic material has good elasticity, such that the fluid bladder can expand or contract effectively through the flow of the fluid medium. When subjected to the swelling force released by the battery cell 10, the fluid bladder 1 can be compressed and produce elastic deformation along a direction of action of the swelling force of the battery cell 10, and can rebound after the swelling force of the battery cell 10 decreases, thereby adapting to different swelling forms of the battery cell 10. This enables the fluid bladder 1 to continuously apply an appropriate force to the surface of the battery cell 10 along the first direction, providing an appropriate swelling space for the battery cell 10 while reducing the swelling of the battery cell 10, so that the stress on the surface of the battery cell 10 along the first direction becomes more uniform, reducing the possibility of stress concentration in the battery cell 10, and effectively improving the performance of the battery 100.

In some embodiments, the elastic material includes elastic rubber.

Elastic rubber has good elasticity and is easy to mold, which can effectively reduce processing costs. In addition, elastic rubber has good wear resistance and anti-aging properties, which can improve the service performance of the fluid bladder 1.

However, those skilled in the art should understand that the elastic material is not limited to rubber only, and the fluid bladder 1 can also be made of any other suitable elastic material.

In some embodiments, along the first direction, the pressure control unit 20 is disposed adjacent to at least one of the surfaces of the battery cell 10 facing the first direction.

In the initial state, that is, when the battery cell 10 has not yet swelled, the adjacent arrangement may mean that the pressure control unit 20 is disposed in contact with the battery cell 10, or that the pressure control unit 20 is disposed close to but not in contact with the battery cell 10. The embodiments of the present disclosure do not specifically limit this, as long as the pressure control unit 20 can apply a force to the battery cell 10, at least when the battery cell 10 swells, to control the swelling degree of the battery cell 10.

Since the battery cell 10 usually swells along the stacking direction (first direction) of the electrode assemblies, at least when the battery cell 10 swells, the pressure control unit 20 being disposed adjacent to at least one of the surfaces of the battery cell 10 facing the first direction can apply a swelling restraining force to the surface of the battery cell 10 facing the first direction, thereby controlling the swelling degree of the battery cell 10.

In some embodiments, a plurality of the battery cells 10 are provided, and the plurality of battery cells 10 are arranged along the first direction. The pressure control unit 20 is disposed between adjacent battery cells 10, and/or between the battery cell 10 and an inner wall of the housing assembly 30 adjacent to the battery cell 10.

Accordingly, one pressure control unit 20 can simultaneously apply forces to adjacent battery cells 10, and may also apply an appropriate force to the surface of the battery cell 10 adjacent to the housing assembly 30 facing the first direction, thereby helping to provide an appropriate swelling restraining force for the battery cell, which is beneficial for improving the performance of the battery.

Moreover, allowing adjacent battery cells 10 to share one pressure control unit 20 helps reduce the number of parts. Since the pressure control unit 20 can be disposed between the inner wall of the housing assembly 30 and the battery cell 10 adjacent to the inner wall, a swelling restraining force can also be applied to the surface of the battery cell 10 adjacent to the inner wall. Therefore, swelling restraint and pressure control can be applied to the large surfaces of each battery cell 10 accommodated in the housing assembly 30.

In some embodiments, the pressure control unit 20 is disposed between every two adjacent battery cells 10, and/or at least two battery cells 10 form a battery cell group, the pressure control unit 20 is disposed between two battery cell groups, and/or the pressure control unit 20 is disposed between the battery cell group and the battery cell 10 adjacent to the battery cell group.

Accordingly, the pressure control unit 20 can be arranged at different positions within the housing assembly 30 according to different situations of the battery cells 10. For example, when the thickness of a single battery cell 10 is relatively large, in order to ensure the average stress on the surface of the battery cell 10 facing the first direction, the pressure control unit 20 may apply a force to only one battery cell 10 through the side facing the first direction. When the thickness of a single battery cell 10 is relatively small, the pressure control unit 2 may simultaneously apply forces to a plurality of battery cells 10 through the side facing the first direction, thereby effectively reducing the swelling of the battery cell 10.

The number of battery cells 10 on two sides of the pressure control unit 20 facing the first direction may be the same or different. The embodiments of the present disclosure do not specifically limit the number of battery cells 10 on two sides of the pressure control unit 20 facing the first direction, as long as the average stress on the surfaces of these battery cells 10 facing the first direction can be within a preset range.

In some embodiments, the battery cell 10 is a pouch battery cell or a prismatic battery cell.

Pouch battery cells are usually encapsulated by a soft aluminum-plastic packaging film and have poor resistance to deformation. Therefore, pouch battery cells are more prone to swelling during the charge-discharge process. However, in the embodiments of the present disclosure, by providing the pressure control unit 20, the swelling of pouch battery cells can be effectively reduced, thereby reducing the occurrence of undesirable phenomena such as lithium plating caused by excessive swelling of pouch battery cells and improving the charge-discharge cycle life of the battery 100 and the performance of the battery 100.

Prismatic battery cells may also swell during the charge-discharge process, and the pressure control unit 20 can similarly apply a force to the prismatic battery cell to control the swelling degree of the prismatic battery cell.

However, those skilled in the art should understand that the battery cell 10 is not limited to pouch battery cells and prismatic battery cells. The pressure control unit 20 in the embodiments of the present disclosure may also be used to control the swelling degree of other battery cells or the like.

According to a second aspect of the present disclosure, a pressure control unit 20 is provided for a battery 100. The battery 100 includes at least one battery cell 10, and the battery cell 10 includes electrode assemblies stacked along a first direction. The battery cell 10 includes surfaces facing each other along the first direction. The pressure control unit 20 applies a force to the battery cell 10, at least when the battery cell 10 swells, to control stress on a surface of the swollen battery cell 10. The pressure control unit 20 is configured such that a dimension of the pressure control unit 20 along the first direction can change with the swelling of the battery cell 10.

When the battery cell 10 swells, the pressure control unit 20 may apply a force to the battery cell 10 to control stress on the surface of the battery cell 10 within an appropriate range, thereby reducing the swelling of the battery cell 10 and providing an appropriate swelling space for the battery cell 10, so that the swelling force of the battery cell 10 can be uniformly released, reducing the polarization accumulation of the battery cell 10, which is beneficial for improving the performance and charge-discharge cycle life of the battery 100.

In some embodiments, a maximum pressure that the pressure control unit 20 can apply is within a range from 200 N to 4000 N.

Accordingly, the pressure control unit 20 can apply a large swelling restraining force to the battery cell 10 and can control the swelling restraining force within an appropriate range, thereby effectively resisting the swelling force of the battery cell 10. Even when the swelling force of the battery cell 10 is relatively large, the average stress on the surface (for example, a large surface) of the battery cell 10 can still be maintained within an appropriate range. Moreover, since the maximum pressure that the pressure control unit 20 can apply is relatively large, it is less likely that elastic failure occurs such that the pressure control unit cannot rebound and thus cannot continue to provide an appropriate swelling restraining force to the battery cell 10.

In some embodiments, the pressure control unit 20 includes at least one support member 6 and at least one elastic member 7. A surface of the support member 6 on one side along the first direction is in contact with one of the surfaces of the battery cell 10 facing the first direction, and a surface of the support member 6 on the other side along the first direction is in contact with the elastic member 7. The support member 6 can apply a force to the battery cell 10 under an action of the elastic force of the elastic member 7, where a contact area between the support member 6 and the surface of the battery cell 10 is greater than a contact area between the support member 6 and the elastic member 7.

Accordingly, after the pressure control unit 20 receives the swelling force released by the battery cell 10, the elastic member 7 may be compressed and produce elastic deformation along the direction of the swelling force of the battery cell 10, and can rebound after the swelling force of the battery cell 10 decreases. Correspondingly, a force is applied to the surface of the battery cell 10, thereby adapting to different swelling forms of the battery cell 10, so that the pressure control unit 20 can maintain an appropriate force on the battery cell 10 through an elastic action of the elastic member 7 to control the swelling degree of the battery cell 10, providing an appropriate swelling space for the battery cell 10 while reducing the swelling of the battery cell 10.

In addition, since the pressure control unit 20 further includes the support member 6, and the contact area between the support member 6 and the surface of the battery cell 10 is greater than the contact surface with the elastic member 7, the force applied by the elastic member 7 to the battery cell 10 can be dispersed, thereby making the stress on the surface of the battery cell 10 more uniform and reducing the possibility of stress concentration.

In some embodiments, the support member 6 is configured as a plate shape, the number of the support members 6 is at least two, and the support members 6 are disposed opposite each other along the first direction. The elastic member 7 is disposed between the two support members 6 oppositely disposed along the first direction and connected to at least one of the two support members 6, and the elastic member 7 includes a compression spring.

The plate-shaped support member 6 can increase the contact area between the pressure control unit 20 and the battery cell 10, thereby making the stress on the surface of the battery cell 10 more uniform.

In addition, the swelling degree of the battery cell 10 can be controlled through a simple structure such as the compression spring, so that while the swelling of the battery cell 10 is reduced, an appropriate swelling space is also provided for the battery cell 10, thereby reducing the possibility of stress concentration in the battery cell 10.

According to a third aspect of the present disclosure, a battery pack 400 is provided. The battery pack 400 includes an enclosure 401 and at least one battery 100 according to the first aspect of the present disclosure, the battery 100 being accommodated in the enclosure 401.

Since the batteries 100 according to the first aspect of the present disclosure can be used in groups, a higher total energy can be provided.

Moreover, in the battery pack 400 provided in the embodiments of the present disclosure, since battery cells 10 provided with pressure control units 20 are adopted, an average stress on the large surfaces of the battery cells 10 is maintained within an appropriate range and exhibits good uniformity, and the risk of stress concentration is reduced. Therefore, the risk of reduced charge-discharge cycle life of the battery pack 400 due to swelling of the battery cells 10 is reduced.

According to a fourth aspect of the present disclosure, an electric device is provided. The electric device includes the battery according to the first aspect of the present disclosure for supplying electrical energy or the battery pack according to the third aspect of the present disclosure.

The electric device in the embodiments of the present disclosure adopts the battery pack 400 with good performance as described above, thereby reducing the time spent on maintenance and reducing the risk that the electric device fails due to failure of the battery pack 400.

According to a fifth aspect of the present disclosure, an energy storage device is provided. The energy storage device includes the battery according to the first aspect of the present disclosure for storing electrical energy or supplying electrical energy or the battery pack according to the third aspect of the present disclosure.

The energy storage device in the embodiments of the present disclosure adopts the battery pack 400 with good performance as described above, thereby reducing the time spent on maintenance and reducing the risk that the energy storage device fails due to failure of the battery pack 400.

Below, specific examples of some embodiments of the present disclosure are described with reference to the accompanying drawings.

As a specific example, the battery 100 includes cells (battery cells 10) and pressure control structures (pressure control units 20). The cells are pouch cells, and the pressure control structure may be arranged between two cells. The pressure control structure covers the large surface (surface facing the first direction) of the winding/lamination structure (electrode assembly) inside the cell, and needs to cover at least more than 50% of the area of the large surface of the winding/lamination structure inside the cell. One or more cells are respectively arranged on two sides of the pressure control structure facing the first direction, such that the pressure control structure can simultaneously control swelling degree of the battery cells on two sides. In this arrangement, it is optimal that two cells are arranged on one side of the pressure control structure.

The pressure control structure includes a partition plate (support member 6) and elastic springs (elastic members 7). The partition plate has a certain stiffness; for example, the partition plate may be made of glass fiber or an integrally injection-molded nylon material. A plurality of elastic springs are provided, and the plurality of elastic springs are arranged as closely as possible. The outer diameter of a single elastic spring is not greater than 50 mm, and the distance between adjacent elastic springs is not greater than 4 times the outer diameter of the elastic spring.

The pressure control structure can maintain the average stress on the large surface of the cell within a range of 0.1 MPa to 2 MPa under the action of the elastic force of the elastic springs, and can ensure that, on the same surface of the same cell at the same moment, a value of the minimum stress calculated per unit area to the maximum stress calculated per unit area is greater than 50%, thereby ensuring uniformity of the stress on the large surface of the cell.

The above embodiments are merely intended for describing the technical solutions of the present disclosure but not for limiting the present disclosure. Although the present disclosure has been described in detail with reference to the above embodiments, those of ordinary skill in the art should understand that modifications can still be made to the technical solutions described in the above embodiments, or equivalent replacements can be made to some or all of the technical features; and these modifications or replacements do not make the essence of the corresponding technical solutions deviate from the scope of the technical solutions of the embodiments of the present disclosure, and they should all be covered within the scope of the present disclosure. In particular, as long as there is no structural conflict, the various technical features mentioned in the various embodiments can be combined in any manner.

## Claims

1. A battery, wherein the battery comprises:
a housing assembly;
at least one battery cell accommodated in the housing assembly, the battery cell comprising electrode assemblies stacked along a first direction; and
at least one pressure control unit accommodated in the housing assembly, the pressure control unit applying a force to the battery cell, at least when the battery cell swells, to control stress on a surface of the swollen battery cell;
wherein the pressure control unit is configured such that a dimension of the pressure control unit along the first direction is capable of changing with the swelling of the battery cell.

2. The battery according to claim 1, wherein
the battery cell comprises surfaces facing each other along the first direction, and
at least when the battery cell swells, an average stress on the same surface of the same battery cell is within a range from 0.1 MPa to 2 MPa.

3. The battery according to claim 1 or 2, wherein
for the same surface of the same battery cell, a value of a minimum stress calculated per unit area divided by a maximum stress calculated per unit area at the same moment is greater than 50%.

4. The battery according to any one of claims 1 to 3, wherein
a maximum pressure that the pressure control unit is capable of applying is within a range from 200 N to 4000 N.

5. The battery according to any one of claims 1 to 4, wherein
each of the pressure control units comprises at least one support member and at least one elastic member, a surface of the support member on one side along the first direction is in contact with one of the surfaces of the battery cell facing the first direction, a surface of the support member on the other side along the first direction is in contact with the elastic member, and the support member is capable of applying a force to the battery cell under an action of the elastic force of the elastic member;
wherein a contact area between the support member and the surface of the battery cell is greater than a contact area between the support member and the elastic member.

6. The battery according to claim 5, wherein
the support member is formed in a plate shape, and
in each of the pressure control units, the number of the support members is at least two, the support members are disposed opposite each other along the first direction, and the elastic member is disposed between the two support members oppositely disposed along the first direction and connected to at least one of the two support members.

7. The battery according to claim 5 or 6, wherein
the support member is made of a rigid material.

8. The battery according to claim 7, wherein
the rigid material comprises glass fiber or nylon plastic.

9. The battery according to any one of claims 5 to 8, wherein
in each of the pressure control units, a plurality of elastic members are provided, and the plurality of elastic members are spaced apart from each other on the support member.

10. The battery according to claim 9, wherein
the plurality of elastic members are disposed on the support member in an array arrangement; or
the plurality of elastic members are disposed on the support member in a radial arrangement.

11. The battery according to claim 9 or 10, wherein
an equivalent outer diameter of each of the elastic members is less than or equal to 50 mm and greater than or equal to 1 mm.

12. The battery according to any one of claims 9 to 11, wherein
a spacing distance between two adjacent elastic members is less than or equal to 4 times the equivalent outer diameter of the elastic members.

13. The battery according to any one of claims 9 to 12, wherein
in each of the pressure control units, the elastic members have the same or different stiffness.

14. The battery according to any one of claims 5 to 13, wherein
the elastic member comprises a compression spring.

15. The battery according to any one of claims 5 to 14, wherein
in each of the pressure control units, within the same projection plane perpendicular to the first direction, a projection area of the support member is greater than a projection area of the electrode assembly in the battery cell.

16. The battery according to claim 15, wherein
when viewed along the first direction, a portion of an outer contour of the elastic member disposed at one side edge of the support member protrudes beyond a side edge of the electrode assembly or overlaps with the side edge of the electrode assembly.

17. The battery according to any one of claims 5 to 14, wherein
within the same projection plane perpendicular to the first direction, a projection area of the support member is less than or equal to a projection area of the electrode assembly in the battery cell, and
when viewed along the first direction, the elastic member disposed at one side edge of the support member is recessed relative to a side edge of the electrode assembly or overlaps with the side edge of the electrode assembly.

18. The battery according to any one of claims 5 to 17, wherein
the support member comprises a first surface and a second surface, the first surface being an opposite surface of the second surface along the first direction; and
the first surface and/or the second surface is provided with a buffer layer.

19. The battery according to any one of claims 1 to 4, wherein
the pressure control unit comprises a fluid bladder, an accommodating cavity is formed inside the fluid bladder, the accommodating cavity contains a fluid medium, and the fluid bladder is capable of contracting or expanding through flow of the fluid medium to apply the force to the battery cell through fluid pressure generated by the fluid medium.

20. The battery according to claim 19, wherein
the fluid bladder comprises an inlet and an outlet, wherein the inlet and the outlet are respectively in communication with the accommodating cavity, the inlet is configured for the fluid medium to flow into the accommodating cavity from outside, and the outlet is configured for the fluid medium to flow out of the accommodating cavity; and
the fluid bladder is capable of expanding or contracting through inflow or outflow of the fluid medium.

21. The battery according to claim 19 or 20, wherein
the fluid bladder is made of an elastic material.

22. The battery according to claim 21, wherein
the elastic material comprises elastic rubber.

23. The battery according to any one of claims 1 to 22, wherein
along the first direction, the pressure control unit is disposed adjacent to at least one of the surfaces of the battery cell facing the first direction.

24. The battery according to claim 23, wherein
a plurality of the battery cells are provided, and the plurality of battery cells are arranged along the first direction; and
the pressure control unit is disposed between adjacent battery cells, and/or between the battery cell and an inner wall of the housing assembly adjacent to the battery cell.

25. The battery according to claim 24, wherein
the pressure control unit is disposed between every two adjacent battery cells; and/or
at least two battery cells form a battery cell group, and the pressure control unit is disposed between two battery cell groups; and/or
the pressure control unit is disposed between the battery cell group and the battery cell adjacent to the battery cell group.

26. The battery according to any one of claims 1 to 25, wherein
the battery cell comprises a pouch battery cell or a prismatic battery cell.

27. A pressure control unit for a battery, wherein
the battery comprises at least one battery cell, the battery cell comprising electrode assemblies stacked along a first direction, and the battery cell comprising surfaces facing each other along the first direction;
the pressure control unit applies a force to the battery cell, at least when the battery cell swells, to control stress on a surface of the swollen battery cell; and
the pressure control unit is configured such that a dimension of the pressure control unit along the first direction is capable of changing with the swelling of the battery cell.

28. The pressure control unit according to claim 27, wherein
a maximum pressure that the pressure control unit is capable of applying is within a range from 200 N to 4000 N.

29. The pressure control unit according to claim 27 or 28, wherein
the pressure control unit comprises:
at least one support member and at least one elastic member, a surface of the support member on one side along the first direction is in contact with one of the surfaces of the battery cell facing the first direction, a surface of the support member on the other side along the first direction is in contact with the elastic member, and the support member is capable of applying a force to the battery cell under an action of the elastic force of the elastic member;
wherein a contact area between the support member and the surface of the battery cell is greater than a contact area between the support member and the elastic member.

30. The pressure control unit according to claim 29, wherein
the support member is configured as a plate shape, the number of the support members is at least two, and the support members are disposed opposite each other along the first direction; and
the elastic member is disposed between the two support members oppositely disposed along the first direction and connected to at least one of the two support members; and the elastic member comprises a compression spring.

31. A battery pack, comprising:
an enclosure; and
at least one battery according to any one of claims 1 to 26, the battery being accommodated in the enclosure.

32. An electric device, wherein the electric device comprises the battery according to any one of claims 1 to 16 or the battery pack according to claim 31 for supplying electrical energy.

33. An energy storage device, wherein the energy storage device comprises the battery according to any one of claims 1 to 26 or the battery pack according to claim 31 for storing electrical energy or supplying electrical energy.
